# EUROPEAN PATENT APPLICATION

(11) **EP 4 516 483 A1**
(43) Date of publication of application: **05.03.2025**
(21) Application number: 23194520.5
(22) Date of filing: 31.08.2023
(51) Int. Cl.: B29C 48/325, B29C 48/10, B29C 48/92, B29C 48/09, B29C 49/04

(54) **ANNULAR EXTRUSION DIE COMPRISING A PIVOTING CENTRAL MANDREL**

(71) Applicant: RENOLIT Nederland B.V., 1438 BD Oude Meer (NL)
(72) Inventor: Marchetti, Martino, 39100 Bolzano (IT); Terdu, Marcel Robert, 3902 CG Veenendaal (NL); Blok, Jacob Robert, 8051 Zürich (CH)
(74) Representative: Keilitz Haines & Partner Patentanwälte PartGmbB

(57) **Abstract**

The present invention relates to an extrusion die (2) for producing a tubular film, comprising: a base part (6), a lip assembly (8) and a mandrel (7) extending in a longitudinal direction (A) of the die (2) between the base part (6) and the lip assembly (8); the lip assembly (8) comprising: a fixed outer lip (16), an inner lip (15) attached to the mandrel (7), and an annular gap (18) provided between the inner lip (15) and the outer lip (16); wherein the mandrel (7) is pivotably mounted in the extrusion die (2), allowing the inner lip (15) to be moved in a lateral direction (B) relatively to the fixed outer lip (16) when the mandrel (7) is pivoted.

## Description

### FIELD OF INVENTION

The present invention relates to an extrusion die featuring an annular gap for extruding thermoplastic materials in a tubular form as well as to an extrusion device comprising several extruders for supplying a melt to the extrusion die.

### BACKGROUND OF THE INVENTION

So-called Blown film extrusion dies having an annular die gap are used in extrusion devices to form tubular single- or multi-layer products. Said products consist of a single- or multi-layer tubular film which is made from various polymer materials or other thermoplastic materials. The multi-layer film may include special-purpose layers, such as barrier layers or layers providing a certain amount of robustness. The thickness of one individual layer usually is in the range of µm or nm. Different layers may have a different thickness.

Well-known so-called "stack" or "pancake" extrusion dies for producing tubular multi-layer products often comprise a base part, a lip assembly providing the annular gap and a mandrel extending between the base part and the lip assembly in a longitudinal direction of the extrusion die. A stack of thin annular disks is arranged about the mandrel, the disks serving to guide one or a plurality of melts to an annular flow channel between the outside of the mandrel and an inner circumference of the annular disks. By consecutively adding a further melt to the annular flow channel, a multi-layer polymer product may be produced. The basic construction of an annular extrusion die is disclosed in EP 2 639 038 A1 for instance; a laminate structure for barrier packaging and suitable materials for the individual layers of the tubular product are disclosed in PCT/EP2018/077012 and PCT/EP2018/077009.

Tubular single- or multi-layer film products which are manufactured by means of annular dies usually have a wall thickness which varies about their circumference. This is mainly because the various melts do not distribute homogenously about the circumference of the annular flow channel, and/or because the lip assembly is not adjusted correctly.

In order to produce a tubular product having a homogenous film thickness, in prior art devices, the position of the annular outer lip is altered relative to the inner lip (wherein the latter is stationary). This kind of gap width adjustment is relatively complex and requires manual intervention. There is no fully automated gap width adjustment in the prior art. It is therefore an object of the present invention to provide an extrusion die for producing a tubular single- or multi-layer film product featuring an improved system for adjusting the gap width of the extrusion die.

### SUMMARY OF THE INVENTION

The present invention proposes an extrusion die for producing a tubular multi-layer product having an improved gap width adjustment system, the extrusion die comprising:
- a base part,
- a lip assembly and
- a mandrel extending in a longitudinal direction of the die between the base part and the lip assembly,
the lip assembly comprising:
- a fixed outer lip,
- an inner lip fixed to the mandrel and
- an annular gap provided between the inner lip and the outer lip;
wherein the mandrel is pivotably mounted in the extrusion die, allowing the inner lip, which is fixedly connected to the mandrel, to be moved relatively to the fixed outer lip in a lateral direction when the mandrel is pivoted.

In a preferred embodiment of the invention, the mandrel is pivotably mounted at the base part. To this end, the extrusion die according to the invention may comprise a Cardan joint or universal joint, respectively at the base.

The aforementioned Cardan joint preferably comprises a joint ball (or a portion thereof) attached to the mandrel and a joint socket which is provided at the base part.

The gap width adjustment system of the extrusion die preferably comprises a pivot mechanism including two or more actuators for effecting a pivotal movement of the mandrel about a pivot point. The actuators can be purely mechanical devices, such as screws or bolts, or electrically controllable drives, such as electric motors or piezo actuators, for example.

According to one aspect of the invention, the actuators are arranged on one side of the mandrel, whereas the inner lip is located on the other side of the mandrel, relative to a pivot point about which the mandrel pivots. In an embodiment of the invention, the actuators are arranged at one end portion of the mandrel, and the lip assembly is arranged at the other end portion of the mandrel and the pivot point is in between the two. The mandrel is a rod-shaped element.

In a preferred embodiment of the invention, the extrusion die comprises several actuators which each may exert a force on a base-side portion of the mandrel in a lateral direction, thereby causing the mandrel to pivot around the joint.

The gap width adjustment system according to the invention is preferably configured so that the gap width may be adjusted at any angular position along 360° of the circumference of the gap.

According to one embodiment of the invention, the pivot mechanism comprises two actuators, preferably two electric motors, which are aligned transversely to each other. A transverse configuration of two electric motors allows adjusting of the gap width at any angular position along 360° of the circumference of the gap.

The pivot mechanism of the present invention preferably comprises two or more actuators which are mechanically coupled to the mandrel via a second Cardan joint. The actuators preferably form single drive assembly which is coupled to the mandrel as one unit. The second Cardan joint may comprise a joint ball attached to the mandrel and a joint socket which is connected to the actuator assembly. A reverse configuration is of course also possible.

In a preferred embodiment of the present invention, one of the elements (joint ball or joint socket) of the aforementioned second Cardan joint is connected to one end of the mandrel, the other element is connected to the actuator assembly.

The actuators of the pivot mechanism of the invention are preferably mounted to the base part. The base part in turn is preferably mounted to a base stand which is configured to carry the entire extrusion die.

In the extrusion die of the present invention, the base part is preferably provided with one or more entry openings for supplying a melt.

Further, a preferred embodiment of an extrusion die according to the invention comprises a stack of annular disks arranged about the mandrel, which serve to guide various melts to an annular flow channel between the outside of the mandrel and an inner circumference of the annular disks. The disks are preferably arranged concentrically about the mandrel.

The present invention also proposes an extrusion device comprising an extrusion die as described herein and several extruders for supplying various melts to the extrusion die.

The extrusion device according to the present invention may also comprise means for folding the tubular single- or multi-layer film product into a collapsed bubble, and a roll on which the collapsed bubble film product is wound. The aforementioned means for folding the tubular single- or multi-layer product may comprise one or more rollers. In an embodiment of the present invention, the bubble which is produced by the extrusion die is guided to the folding device where the bubble collapses and folds into a ribbon.

A preferred embodiment of the extrusion device of the invention comprises a sensor, in particular a sensor equipped scanner, for measuring a thickness of the single- or multi-layer film product and a closed loop control for automatically adjusting the thickness of the single- or multi-layer film product depending on the measurement data.

In an embodiment of an extrusion die having a fully automized gap width adjustment system, the sensor equipped scanner is moveable in a transverse direction of the collapsed bubble or around the circumference of the not yet collapsed bubble. During operation, for example the scanner is moved back and forth from one lateral edge to the other lateral edge of the collapsed bubble, while the collapsed bubble is conveyed in its longitudinal direction. Each position along the width of the collapsed bubble corresponds to an angular position of the annular gap along its 360° circumference. Thus, the thickness of the collapsed bubble at a certain position within its lateral margins may be altered by adjusting the gap width at the corresponding angular position of the extrusion die.

As mentioned before, the measurement data of the sensor may be used as the actual value in a closed loop control in order to automatically adjust the film thickness of the product.

### BRIEF DESCRIPTION OF THE DRAWINGS

The invention is explained in more detail below with reference to the accompanying drawings which show various embodiments of the present invention.

### DETAILED DESCRIPTION OF EMBODIMENTS

Fig. 1 is a side view of an exemplary extrusion line including an extrusion die for producing a tubular multi-layer product;
Fig. 2 is a cross-sectional view of an extrusion die according to a first embodiment of the invention for producing a tubular single- or multi-layer film product, illustrated without a stack of disks which is normally arranged about the mandrel;
Fig. 3 is a detailed cross-sectional view of the extrusion die of Fig. 2 showing a plurality of disks forming a layer sequence repeater module;
Fig. 4 is a perspective view of an upper portion of the extrusion die as shown in Fig. 2 or 3;
Fig. 5 is a cross-sectional view of the upper portion of the extrusion die according to a second embodiment of the present invention having a pivot mechanism which is operated by electric motors;
Fig. 6 is a perspective view of the base part of an extrusion die having a pivot mechanism according to the second embodiment of the present invention;
Fig. 7 is a perspective view of a scanner for measuring the thickness of a polymer film produced by the extrusion die according to the present invention;
Fig. 8 is a graph showing the variation of the thickness of the film along the width of the folded bubble;
Fig. 9 illustrates a possible alteration of the annular gap caused by pivoting the mandrel in a first direction; and
Fig. 10 illustrates an alteration of the annular gap caused by pivoting the mandrel in a second direction.

Those skilled in the art and following the teachings herein provided will appreciate that while the descriptions below of various extrusion dies include preferred configurations, such configurations are used for illustrative purposes only and may be modified as appropriate depending on need.

The present invention relates to an extrusion die, in particular a co-extrusion die, generally referred to by reference numeral 2.

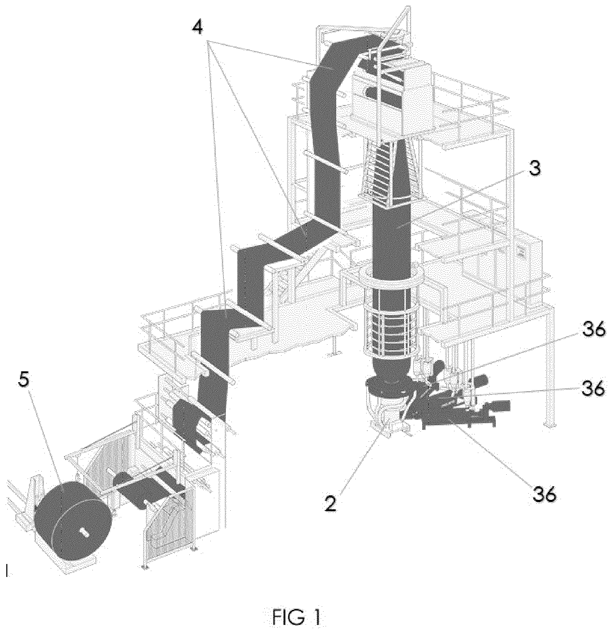

Referring to Fig. 1, an extrusion line 1 is shown which comprises an extrusion die 2 having an annular gap 18 for producing a tubular multi-layer product 3 from a polymer material or any other appropriate thermoplastic material. In the embodiment of Fig. 1, there are several extruders 36 which supply corresponding melt streams to the extrusion die 2. In the extrusion die 2, the various melt streams are consecutively added to an annular flow channel within the die so has to produce a tubular multi-layer product which is ejected at an upper end side of the extrusion die 2 in the form a thin multi-layer film. The tubular product 3 is also called a "bubble". At a certain distance away from the extrusion die 2, the bubble is folded to a collapsed bubble 4 which is then further conveyed downstream (see arrows) and finally wound on a roll 5.

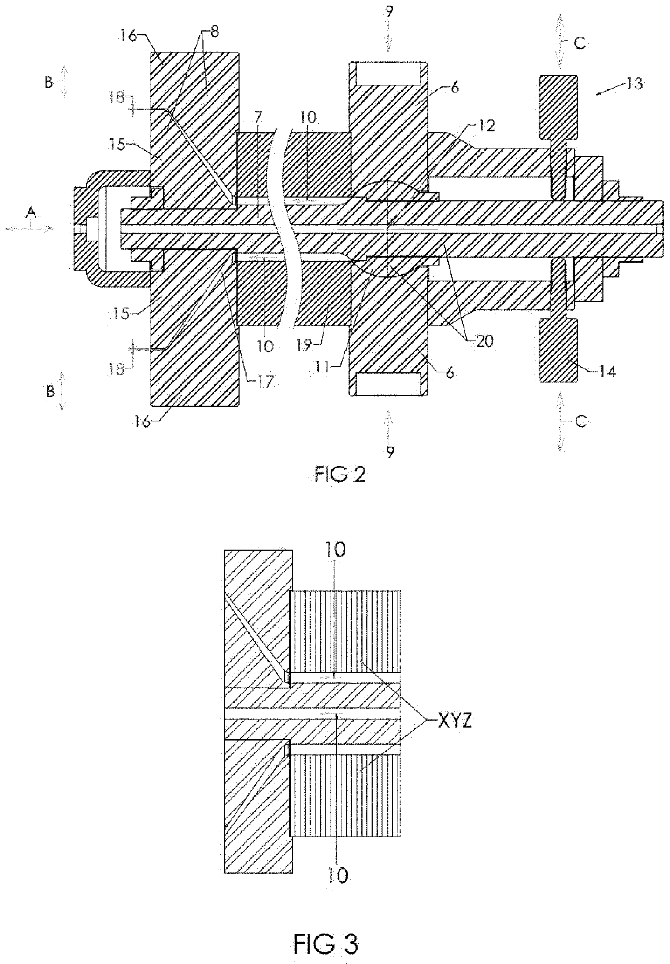

As illustrated in Fig. 2, the extrusion die 2 may include a base part 6 having one or more entry openings 9 for supplying melt from one or more extruders, a lip assembly 8 providing an annular gap 18 at which the tubular single- or multi-layer product is ejected, and a mandrel 7 extending between the base part 6 and the lip assembly 8 in a longitudinal direction A of the extrusion die 2.

As regards the lip assembly 8, it comprises an inner lip 15 which is fixedly attached to the mandrel 7 and a stationary outer lip 16. During operation, several melt streams are supplied to the base part 6 and enter the base part 6 through various entry openings 9. The melt streams are then guided to an annular flow channel 10 located between the outside of the mandrel 7 and an inner circumference of the extrusion die central body 19.

At the end of the flow channel 10, the tubular film enters into a channel 17 provided inside the lip assembly 8. As shown, in Fig. 2, the channel 17 terminates in the annular gap 18 at which the final tubular multi-layer product 3 is ejected in the form of a bubble. The width of the annular gap 18 may be in the range of cm or mm, for instance 0.5 cm or 3.0 cm.

The lip assembly which is generally designated by reference numeral 8 comprises the inner lip 15 and an outer lip 16. As illustrated in Fig. 2, the inner lip 15 is fixedly connected to the mandrel 7. In the embodiment of Fig. 2, the inner lip 15 is mounted to a bracket which is in turn fixed to an end portion of mandrel 7.

In order to allow alteration of the gap 18 width at a desired circumferential position, the mandrel 7 is pivotably mounted in the extrusion die 2. To this end, the extrusion die 2 comprises a corresponding joint 20. When the mandrel 7 is pivoted about the joint 20, the entire part attached to the end portion of the mandrel 7, including the inner lip 15, is moved in a radial direction B relative to the outer lip 16, which is arranged stationery. It is to be noted that the inner lip 15 is not only movable sideways in a direction as indicated by arrows B, but in any lateral or radial direction about an angle of 360°.

In the embodiment of Fig. 2, the mandrel 7 is pivotably mounted at the base 6 of the extrusion die 2. To this end, the extrusion die 2 comprises a Cardan joint 20 or universal joint respectively at the base 6, the Cardan joint 20 comprising a joint ball 11 fixed to the mandrel 7 and a joint socket which is provided at the base part 6. The pivot point of the Cardan joint 20 is designated by reference numeral 12.

In order to adjust the gap width of the gap 18 at a certain angular position, the mandrel 7 is pivoted by means of one or more actuators 14, thereby causing the inner lip 15 which is fixedly connected to the mandrel 7, to be moved in the desired lateral direction B relatively to the fixed outer lip 16.

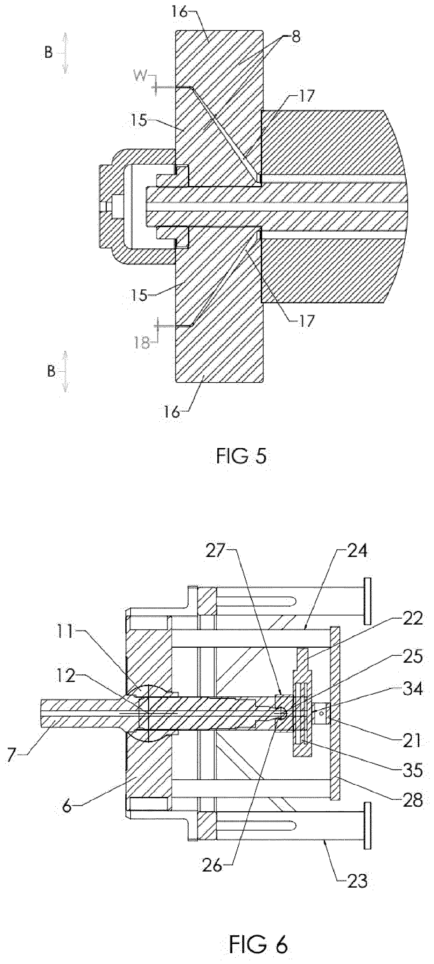

An extrusion die 2 according to the present invention comprises a pivot mechanism 13 including a number of actuators (14 in Fig. 2 or 21, 22 in Fig. 6) for effecting a pivotal movement of the mandrel 7 about its pivot point 12. In the embodiment as shown in Fig. 2 or 3, the actuators are realized as screws 14 or bolts which each may exert a force on a base-side portion of the mandrel 7 in a lateral direction C, thereby causing the mandrel 7 to pivot correspondingly.

As can be seen in Figs. 2 or 3, the actuators 14 are arranged on one side of the mandrel 7, and the inner lip 15 is located on the other side of the mandrel 7, relative to the pivot point 12. I.e., the entire pivot mechanism 13 functions according to the principle of a lever mechanism. The distance between the actuators 14 and the pivot point 12 is preferably shorter than the distance between the pivot point 12 and the inner lip 15. Thus, a small movement in a lateral direction C causes a larger movement of the inner lip 15 in the lateral direction B.

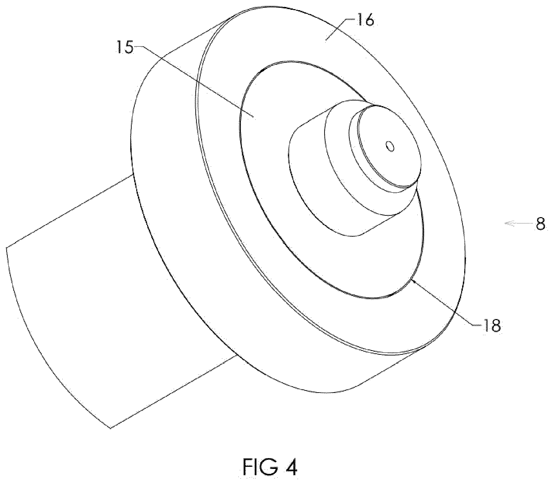

Referring now to Figs. 4 and 5, the lip assembly 8 of the extrusion die 2 is shown in greater detail. In operation, the extrusion die 2 is normally aligned vertically with the lip assembly 8 being on top. As mentioned before, the lip assembly 8 comprises the inner lip 15 mounted to the upper end portion of the mandrel 7 and the outer lip 16. The annular gap 18 is provided between the inner lip 15 and the outer lip 16 and has a circular shape.

Fig. 5 shows that the entire interior part comprising the inner lip 15 moves in a lateral direction B when the mandrel 7 is pivoted. Thereby, the gap width "w" of the gap 18 is altered, which changes the wall thickness of the film of the tubular multi-layer product.

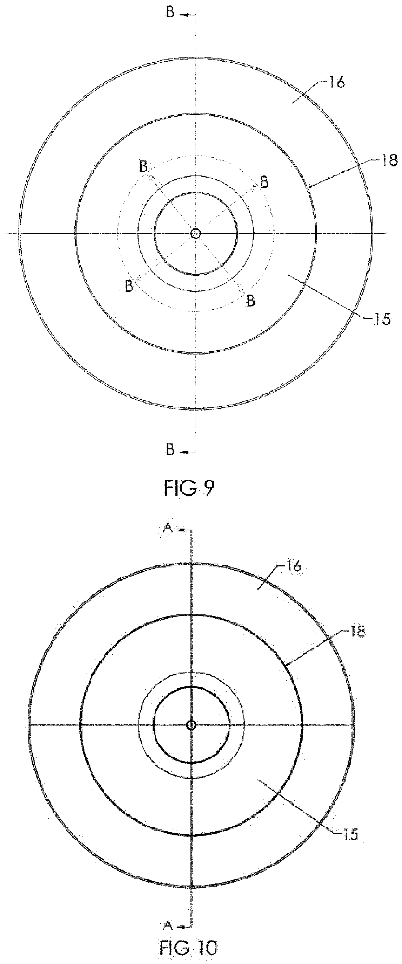

In operation, when the inner lip 15 is moved in a certain direction B as shown in Fig. 10, the gap width is reduced on this side of the annular gap 18, whereas the gap width "w" is enlarged on the other side (corresponding to an angle of 180 degrees). In the illustration of Fig. 9, the inner lip 15 is moved to the top right at an angle of about 45 degrees. In another example, as shown in Fig. 10, the inner lip 15 is moved downwardly at an angle of about 180 degrees (assuming that the zero position is on top in the illustrations of Fig. 9 and 10) so that the gap width "w" is reduced on this side of the annular gap 18, whereas the gap width "w" is enlarged on the other side.

Figs. 6 shows another embodiment of an extrusion die 2 having a different pivot mechanism 13. In this embodiment, the pivot mechanism 13 includes two electric motors 21, 22 which are aligned transversely to each other and coupled to the mandrel 7 via another joint 25. A configuration of two electric motors 21, 22 is sufficient to allow adjusting the gap width "w" at any angular position along 360° of the circumference of the gap 18. The electric motors 21, 22 form a drive unit 28 which is mounted to the base part 6 via a bracket 24. The bracket 24 may comprise several rods mounted to the base part 6. The base part 6 is supported on a base stand 23 which is provided to carry the entire extrusion die 2. The base stand 23 may be a frame made of metal profiles.

As shown in Figs. 6, both actuators 21, 22 are mechanically coupled to the mandrel 7 via a second Cardan joint 25. The second Cardan joint 25 comprises a joint ball 26 fixed to the lower end of the mandrel 7 and a joint socket 27 connected to the drive unit 28.

As can be seen in the sectional view of Fig. 6, each electric motor 21, 22 comprises a spindle 35 which drives an element 34 ("driven element") in its longitudinal direction. In operation, the driven elements 34 are a moved forward or backward by the electric motors 21, 22. Since the driven elements 34 are mechanically coupled to the joint socket 27, any movement of the driven elements 34 is transferred to the second Cardan joint 25 thereby pivoting the mandrel 7 accordingly.

Like in the first embodiment of Figs. 2-5, the mandrel 7 is also pivotally mounted at the base part 6 by means of a first Cardan joint 25. The joint ball 11 of the first Cardan joint 20 is attached to the mandrel 7 and joint socket of the first Cardan joint 20 is provided in the base part 6.

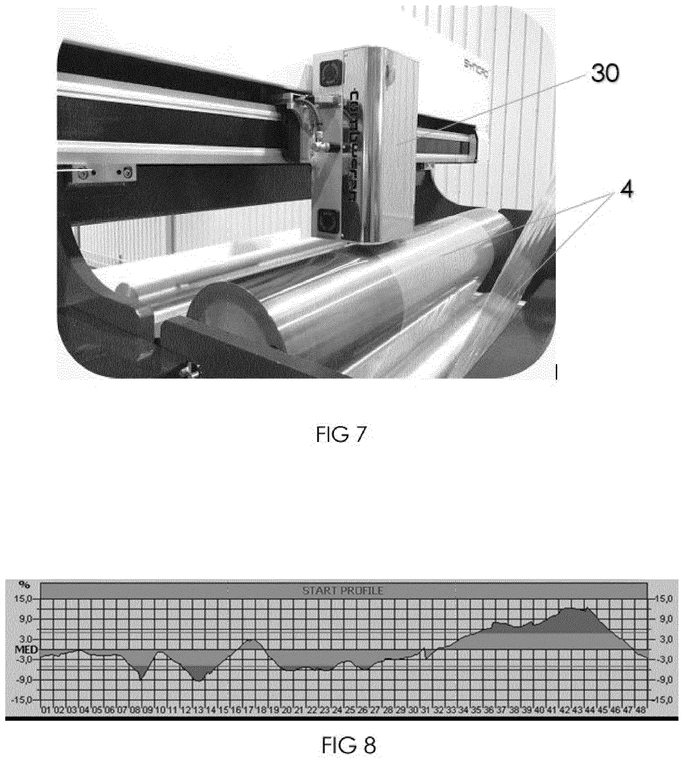

Fig. 7 shows a scanner for measuring the thickness of the multi-layer product in a collapsed state. In fact, the thickness of the multi-layer product 3 is measured in a state where the product is folded into a ribbon. The folded product 4 as shown comprises two layers of film (each film having multiple layers) which are on top of each other. So, the sensor 30 actually measures the thickness of two layers of film.

During operation, the scanner 30 is moved in a transverse direction of the ribbon 4, back and forth, from one lateral edge to the other lateral edge of the ribbon 4, while the ribbon 4 is conveyed in its longitudinal direction. Each position along the width of the ribbon 4 corresponds to an angular position of the angular gap 18 along its circumference.

Fig. 8 shows the deviation of the thickness of the ribbon 4 from an average value versus the width of the ribbon 4. As can be seen in Fig. 9, the thickness of the ribbon 4 tends to be too small on the left-hand side of the ribbon 4 and too large on the righthand side of the ribbon 4. In order to correct the deviation in thickness, the mandrel 7 is pivoted in the required direction by means of the actuators (screws 14 or electric motors 21, 22 for instance) of the pivot mechanism 13.

It is to be noted that the extrusion device 1 may have a fully automized gap width adjustment system including a close loop control which automatically adjusts the position of the inner lip 15 within the lip assembly 8 based on the measurement data provided by the sensor 30.

Of course, it should be understood that a wide range of changes and modifications can be made to the embodiments described above. It is therefore intended that the foregoing description illustrates rather than limits this invention.

## Claims

1. An extrusion die (2) for producing a tubular single- or multi-layer film product (3), comprising:
- a base part (6),
- a lip assembly (8) and
- a mandrel (7) extending in a longitudinal direction (A) of the die (2) between the base part (6) and the lip assembly (8)
the lip assembly (8) comprising:
- a fixed outer lip (16),
- an inner lip (15) attached to the mandrel (7),
- an annular gap (18) provided between the inner lip (15) and the outer lip (16);
wherein the mandrel (7) is pivotably mounted in the extrusion die (2), allowing the inner lip (15) to be moved in a radial direction (B) relatively to the fixed outer lip (16) when the mandrel (7) is pivoted.

2. The extrusion die (2) of claim 1, wherein the mandrel (7) is pivotably mounted at the base part (6).

3. The extrusion die (2) of claim 1, wherein the mandrel (7) is pivotably mounted by means of a Cardan joint (20).

4. The extrusion die (2) of claim 3, wherein the Cardan joint (20) comprises a joint ball (11) which is attached to the mandrel (7) and a joint socket which is provided at the base part (6).

5. The extrusion die (2) of claim 1, wherein the extrusion die (2) comprises a pivot mechanism (13) including two or more actuators (14, 21, 22) for effecting a pivotal movement of the mandrel (7).

6. The extrusion die (2) of claim 5, wherein the actuators (12, 21, 22) are arranged on one side of the mandrel (7), and the inner lip (15) is located on the other side of the mandrel (7) relative to a pivot point (12) about which the mandrel (7) pivots.

7. The extrusion die (2) of claim 5, wherein the actuators (14, 21, 22) comprise adjustment screws (14).

8. The extrusion die (2) of claim 5, wherein the actuators (14, 21, 22) comprise electrically controlled drive units.

9. The extrusion die (2) of claim 5, wherein the pivot mechanism (13) comprises two actuators (14, 21, 22) which are aligned transversely to each other.

10. The extrusion die (2) of claim 5, wherein the pivot mechanism (13) comprises two or more actuators (14, 21, 22) which are mechanically coupled to the mandrel (7) via a second Cardan joint (25).

11. The extrusion die (2) of claim 5, wherein the actuators (14, 21, 22) are mounted to the base part (6).

12. The extrusion die (2) of claim 5, wherein the actuators (14, 21, 22) are arranged so as to exert a force on the mandrel (7) at a base part-side end portion of the mandrel (7).

13. The extrusion die (2) of claim 1, wherein a stack of annular disks (19) is arranged about the mandrel (7).

14. An extrusion line (1) comprising an extrusion die (2) according to claim 1 and further comprising several extruders (36) for supplying a melt to the extrusion die (2).

15. An extrusion line (1) according to claim 15, further comprising a sensor equipped scanner for measuring a thickness profile of the single- or multi-layer film product (3) and a closed loop control for automatically adjusting the thickness of the multi-layer film product (3) depending on the measurement data by way of automatically repositioning the mandrel and the linked inner lip relatively versus the fixed outer lip.
